# EUROPÄISCHE PATENTANMELDUNG

(11) **EP 1 336 533 A2**
(43) Veröffentlichungstag der Anmeldung: **20.08.2003**
(21) Anmeldenummer: 03001906.1
(22) Anmeldetag: 30.01.2003
(51) Int. Cl.: B60N 3/10

(54) **Halter für einen Getränkebehälter**

(30) Priorität: 15.02.2002 DE 10206267
(71) Anmelder: fischer automotive systems GmbH, 72160 Horb (DE)
(72) Erfinder: Schaal, Falk, 72275 Alpirsbach (DE)

(57) **Zusammenfassung**

Die Erfindung betrifft einen Halter (10) zum Einstellen eines Getränkebehälters wie beispielsweise einer Getränkedose. Der Halter (10) weist eine federbeaufschlagte Durchmesserausgleichsklappe (14) zur Anpassung an unterschiedliche Durchmesser von Getränkebehältern auf. Die Erfindung schlägt vor, die Durchmesserausgleichsklappe (14) mit einer entriegelbaren Ratscheneinrichtung (24, 26) gegen die Kraft eines Federelements (22) in einer Ausnehmung (20) am Umfang der Aufnahme (12) zu halten. Dadurch ist die Aufnahme (12) als Fach zum Einlegen von Gegenständen verwendbar, wenn kein Getränkebehälter eingestellt ist.

## Beschreibung

Die Erfindung betrifft einen Halter für einen Getränkebehälter mit den Merkmalen des Oberbegriffs des Anspruchs 1.

Derartige Halter sind an sich bekannt. Sie werden beispielsweise in Kraftwagen eingebaut und dienen dort zum kippsicheren Halten eines Getränkebehälters wie beispielsweise einer Getränkedose, einer Tasse oder einem Becher. Bekannte Halter weisen eine Aufnahme zum Einstellen des Getränkebehälters auf, wobei die Aufnahme beispielsweise eine zylinderförmige Vertiefung sein kann. Zur Anpassung des Halters an Getränkebehälter mit unterschiedlichen Durchmessern ist es bekannt, ein Ausgleichselement vorzusehen, das mit einer Führung so am Halter geführt ist, dass es in die Aufnahme hinein und aus der Aufnahme heraus beweglich ist. Ist das Durchmesserausgleichselement in die Aufnahme hinein bewegt, verkleinert es einen für den Getränkebehälter verfügbaren Raum der Aufnahme. Ist das Durchmesserausgleichselement aus der Aufnahme heraus bewegt steht der volle Raum der Aufnahme zur Verfügung. Das Durchmesserausgleichselement ist üblicherweise federbeaufschlagt, es wird von einem Federelement in die Aufnahme hinein bewegt und dadurch federelastisch seitlich gegen einen Umfang eines in die Aufnahme eingestellten Getränkebehälters gedrückt. Es hält dadurch den in die Aufnahme eingestellten Getränkebehälter kippsicher. Das Federelement kann ein separates Teil sein, es kann auch einstückig mit dem Durchmesserausgleichselement und/oder der Aufnahme bzw. dem Halter sein.

Der Erfindung liegt die Aufgabe zugrunde, einen Halter für einen Getränkebehälter der vorstehend erläuterten Art so weiterzubilden, dass bei Nichtgebrauch des Halters zum Einstellen eines Getränkebehälters die Aufnahme vollständig, beispielsweise zum Einlegen von Gegenständen, verfügbar ist.

Diese Aufgabe wird erfindungsgemäß durch die Merkmale des Anspruchs 1 gelöst. Der erfindungsgemäße Halter weist eine entriegelbare Rasteinrichtung auf, die das Durchmesserausgleichselement gegen die Kraft des Federelements in der aus der Aufnahme heraus bewegten Stellung hält. Das Durchmesserausgleichselement stört dadurch nicht das Einlegen von Gegenständen in die Aufnahme des Halters. Zum Einstellen eines Getränkebehälters wird die Rasteinrichtung entriegelt und das Federelement bewegt das Durchmesserausgleichselement in die Aufnahme hinein, so dass das Durchmesserausgleichselement in oben beschriebener Weise einen eingestellten Getränkebehälter kippsicher in der Aufnahme hält.

Eine Ausgestaltung der Erfindung sieht eine Ratscheneinrichtung als Rasteinrichtung vor, die eine Bewegung des Durchmesserausgleichselements aus der Aufnahme heraus zulässt und gegen eine Bewegung des Durchmesserausgleichselements in die Aufnahme hinein sperrt. Zum Bewegen des Durchmesserausgleichselements in die Aufnahme hinein wird die Ratscheneinrichtung entriegelt und das Durchmesserausgleichselement bewegt sich federbeaufschlagt in die Aufnahme hinein.

Eine erfindungsgemäße Weiterbildung sieht eine Ratscheneinrichtung mit mindestens einer Zwischenraststellung vor, in der die Ratscheneinrichtung das Durchmesserausgleichselement zwischen der aus der Aufnahme heraus bewegten und der vollständig in die Aufnahme hinein bewegten Stellung hält. Diese Ausgestaltung der Erfindung ermöglicht eine stufenweise Anpassung an unterschiedliche Durchmesser von Getränkebehältern.

Die Führung des Durchmesserausgleichselements ist vorzugsweise eine Schwenklagerung. Eine Schwenklagerung hat den Vorteil, dass sie einfach und preisgünstig herstellbar ist und dass ein Verkanten oder Verklemmen normalerweise nicht auftritt.

Eine Ausgestaltung der Erfindung sieht ein Fach vor, das größer als zum Einstellen eines Getränkebehälters erforderlich ist. Zum Einstellen eines Getränkebehälters wird das Durchmesserausgleichselement in das Fach hinein bewegt und trennt einen Teil des Fachs so vom übrigen Fach ab, dass der Getränkebehälter kippsicher einstellbar ist. Der abgetrennte Teil des Fachs bildet die Aufnahme zum Einstellen des Getränkebehälters. Der übrige Teil des Fachs ist zum Einlegen von Gegenständen verwendbar. Bei Nichtgebrauch zum Einstellen eines Getränkebehälters lässt sich das Durchmesserausgleichselement aus dem Fach heraus bewegen, so dass das gesamte Fach zum Einlegen von Gegenständen verfügbar ist.

Die Erfindung wird nachfolgend anhand in der Zeichnung dargestellter Ausführungsbeispiele näher erläutert. Es zeigen:
- Figuren 1a-c: ein erstes Ausführungsbeispiel eines erfindungsgemäßen Halters in unterschiedlichen Stellungen in einer perspektivischen Schnittdarstellung;
- Figur 2a: ein zweites Ausführungsbeispiel eines erfindungsgemäßen Halters in perspektivischer Darstellung;
- Figur 2b: eine Schnittdarstellung des Halters aus Figur 2a; und
- Figuren 3a und b: ein drittes Ausführungsbeispiel eines erfindungsgemäßen Halters in perspektivischer, teilweise geschnittener Darstellung in unterschiedlichen Stellungen.

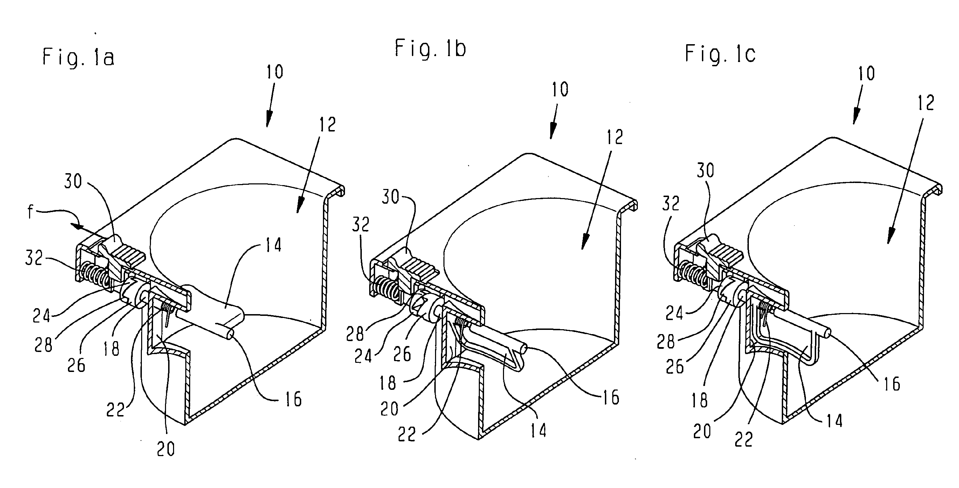

Der in Figur 1a dargestellte, erfindungsgemäße Halter 10 weist eine zylinderförmige Vertiefung auf, die eine Aufnahme 12 zum Einstellen eines nicht dargestellten Getränkebehälters bildet. Der Getränkebehälter kann beispielsweise eine Getränkedose, ein Becher oder eine Tasse sein. Zur Anpassung an unterschiedliche Durchmesser von Getränkebehältern weist der Halter 10 ein Durchmesserausgleichselement auf, das im dargestellten und beschriebenen Ausführungsbeispiel der Erfindung als Durchmesserausgleichsklappe 14 ausgebildet ist. Zur beweglichen Führung der Durchmesserausgleichsklappe 14 weist der Halter 10 eine Schwenklagerung auf, deren gedachte Schwenkachse horizontal verläuft. Zur Schwenklagerung weist die Durchmesserausgleichsklappe 14 einen seitlich abstehenden Lagerzapfen 16 auf einer Seite und eine mit dem Lagerzapfen 16 koaxiale Welle 18 auf einer abgewandten Seite auf. Der Lagerzapfen 16 und die Welle 18 liegen in in der Zeichnung nicht sichtbaren Lagerlöchern des Halters 10 im Umfangsbereich der Aufnahme 12 ein. Die Durchmesserausgleichklappe 14 ist zwischen der in Figur 1a dargestellten, horizontal in die Aufnahme 12 hineinstehenden Stellung um ca. 90° in die in Figur 1c dargestellte, nach unten hängende Stellung schwenkbar. In der in Figur 1c dargestellten, nach unten hängenden Stellung liegt die Durchmesserausgleichsklappe 14 in einer Ausnehmung 20 am Umfang der Aufnahme 12 ein, so dass die Aufnahme 12 vollständig als Fach zum Einlegen von Gegenständen zur Verfügung steht. Figur 1b zeigt eine willkürliche Zwischenstellung der Durchmesserausgleichsklappe 14 beim Verschwenken.

Die Durchmesserausgleichsklappe 14 wird federbeaufschlagt in die Aufnahme 12 hinein verschwenkt: Dazu weist der Halter 10 eine Schenkelfeder 22 auf, die auf einen Dorn der Durchmesserausgleichsklappe 14 aufgesetzt ist, der koaxial zum Lagerzapfen 16 und zur Welle 18 ist. Ein Schenkel der Schenkelfeder 22 stützt sich in der Ausnehmung 20 ab, wobei eine den Schenkel der Schenkelfeder 22 abstützende Wandung der Ausnehmung 20 durch die Schnittdarstellung weggeschnitten, also nicht sichtbar ist. Der andere Schenkel der Schenkelfeder 22 drückt gegen die Durchmesserausgleichklappe 14. Die Schenkelfeder 22 bildet ein Federelement, welches die Durchmesserausgleichklappe 14 in die in Figur 1a dargestellte, horizontale, in die Aufnahme 12 stehende Stellung drückt. Beim Einstellen eines nicht dargestellten Getränkebehälters in die Aufnahme 12 drückt der Getränkebehälter die Durchmesserausgleichsklappe 14 gegen die Federkraft der Schenkelfeder 22 nach unten und außen. Die Schenkelfeder 22 drückt die Durchmesserausgleichsklappe 14 federelastisch gegen einen Umfang des eingestellten Getränkebehälters und hält diesen dadurch kippsicher in der Aufnahme 12. Eine Anpassung an unterschiedliche Durchmesser von Getränkebehältern ist dadurch gegeben.

Um die Durchmesserausgleichsklappe 14 gegen die Federkraft der Schenkelfeder 22 in der Ausnehmung 20 zu halten, weist der Halter 10 eine Ratscheneinrichtung 24, 26 auf, deren eines Teil 26 drehfest mit der Welle 18 der Durchmesserausgleichsklappe 14 und deren anderes Teil 24 drehfest und axial verschieblich am Halter 10 gelagert ist. Die Ratscheneinrichtung 24, 26 ist nach Art einer Klauenkupplung ausgebildet, wobei Klauen bzw. Sperrklinken 28 sägezahnförmig sind. Die Sperrklinken 28 bzw. die Ratscheneinrichtung 24, 26 lassen ein Schwenken der Durchmesserausgleichsklappe 14 aus der horizontalen, in die Aufnahme 12 stehende Stellung in die nach unten hängende Stellung zu und sperren gegen ein Schwenken in entgegengesetzter Richtung. Dadurch hält die Ratscheneinrichtung 24, 26 die Durchmesserausgleichsklappe 14 gegen die Federkraft der Schenkelfeder 22 in der nach unten hängenden, in der Ausnehmung 20 einliegenden, in Figur 1c dargestellten Stellung.

Zum Entriegeln weist die Ratscheneinrichtung 24, 26 eine am Halter 10 verschiebbar geführte Taste 30 auf, die mit dem im Halter 10 drehfesten und axial verschieblichen Teil 24 der Ratscheneinrichtung 24, 26 in Eingriff steht. Durch Verschieben der Taste 30 in Richtung des Pfeils f lassen sich die beiden Teile 24, 26 der Ratscheneinrichtung 24, 26 außer Eingriff bringen, woraufhin die Schenkelfeder 22 die Durchmesserausgleichsklappe 14 in die horizontale, in die Aufnahme 12 stehende Stellung schwenkt. Ein Federelement in Form einer Schraubendruckfeder 32 hält die beiden Teile 24, 26 der Ratscheneinrichtung 24, 26 in Eingriff miteinander. Das Schwenken der Durchmesserausgleichsklappe 14 in die nach unten hängende, in der Ausnehmung 20 einliegende Stellung erfolgt manuell durch Druck auf die Durchmesserausgleichsklappe 14 gegen die Kraft der Schenkelfeder 22.

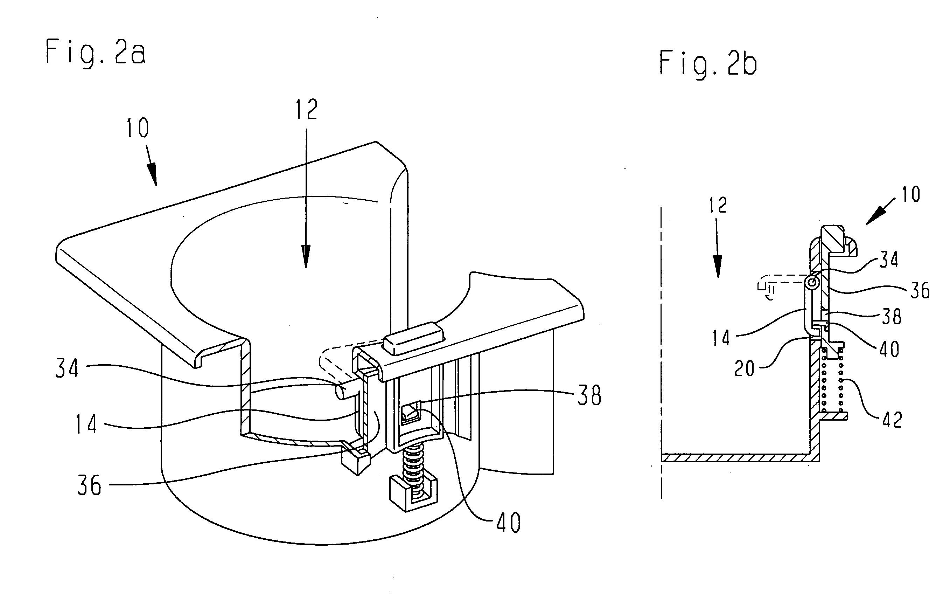

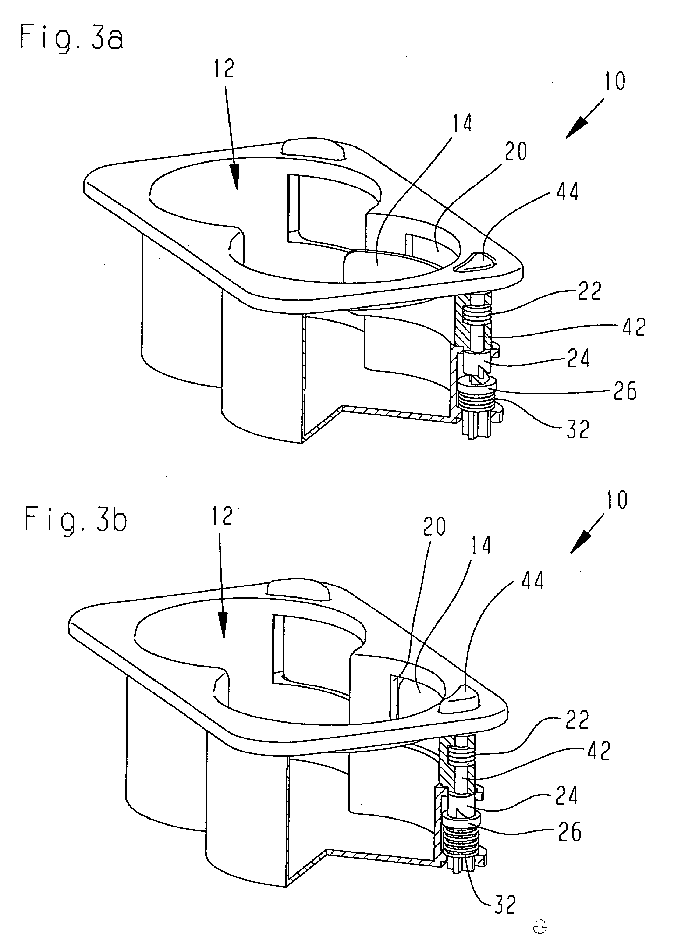

Bei der nachfolgenden Erläuterung von Figuren 2a, b und 3a, b werden für mit Figuren 1a - c übereinstimmende Bauteile gleiche Bezugszahlen verwendet. Der in Figur 2a dargestellte, erfindungsgemäße Halter 10 weist ebenso wie derjenige aus Figur 1a eine zylinderförmige Vertiefung als Aufnahme 12 zum Einstellen eines nicht dargestellten Getränkebehälters auf. An einer Stelle eines Umfangs ist eine Durchmesserausgleichsklappe 14 mit einem Zapfenlager 34 schwenkbar gelagert. Eine nicht dargestellte Schenkelfeder drückt die Durchmesserausgleichsklappe 14 in eine horizontale, in die Aufnahme 12 ragende Stellung. Diese Stellung ist in Figuren 2a und b mit Strichlinien dargestellt. Um die Durchmesserausgleichsklappe 14 gegen die Federkraft der nicht dargestellten Schenkelfeder in der nach unten hängenden, in einer Ausnehmung 20 am Umfang der Aufnahme 12 einliegenden Stellung zu halten, weist der Halter 10 aus Figur 2a eine Rasteinrichtung auf. Die Rasteinrichtung umfasst einen plattenförmigen Schieber 36, der tangential außen am Umfang der Aufnahme 12 angeordnet und achsparallel zur Aufnahme 12 verschiebbar am Halter 10 geführt ist. Der Schieber 36 weist ein viereckiges Loch 38 auf, das in der nach unten hängenden Stellung der Durchmesserausgleichsklappe 14 von einem Rasthaken 40 der Durchmesserausgleichsklappe 14 durchgriffen wird. Der Haken 40 hintergreift den Schieber 36 und hält dadurch die Durchmesserausgleichsklappe 14 in der nach unten hängenden, in der Ausnehmung 20 einliegenden Stellung (Figur 2b). Durch Niederdrücken des Schiebers 36 kommt der Haken 40 frei und die Schenkelfeder schwenkt die Durchmesserausgleichsklappe 14 nach oben in die horizontale, in die Aufnahme 12 ragende Stellung. Der Schieber 36 wird von einem Federelement 42 nach oben gedrückt.

Der in Figuren 3a und b dargestellte, erfindungsgemäße Halter 10 weist zwei konstruktiv übereinstimmende Aufnahmen 12 zum Einstellen nicht dargestellter Getränkebehälter auf. Die Aufnahmen 12 sind jeweils zylinderförmig, wobei ein Durchbruch zwischen den beiden Aufnahmen 12 besteht. In Draufsicht bilden die beiden Aufnahmen 12 eine Acht. Bei Nichtgebrauch des Halters 10 zum Einstellen von Getränkebehältern lassen sich die beiden Aufnahmen 12 als Fach zum Einlegen von Gegenständen benutzen.

Am Umfang weist jede der beiden Aufnahmen 12 eine Durchmesserausgleichsklappe 14 auf, die um eine Welle 42 schwenkbar gelagert ist. Im Unterschied zu Figuren 1 und 2 ist eine gedachte Schwenkachse der Durchmesserausgleichsklappe 14 in Figuren 3a und b senkrecht. Eine Schenkelfeder 22 bewegt die Durchmesserausgleichsklappe 14 wie in der vorderen Aufnahme 12 von Figur 3a zu sehen in die Aufnahme 12 hinein. Eine Ratscheneinrichtung 24, 26 wie diejenige in Figuren 1a - c hält die Durchmesserausgleichsklappe 14 gegen die Federkraft der Schenkelfeder 22 in einer Ausnehmung 20 am Umfang der Aufnahme 12. Entriegelt wird die Ratscheneinrichtung 24, 26 durch Niederdrücken einer Taste 44, die über die Welle 42 die beiden Teile 24, 26 der Ratscheneinrichtung 24, 26 außer Eingriff bringt. Die Welle 42 durchragt das der Durchmesserausgleichsklappe 14 zugeordnete Teil 24 der Ratscheneinrichtung 24, 26 und drückt das der Durchmesserausgleichsklappe 14 ferne Teil 26 der Ratscheneinrichtung 24, 26 gegen die Kraft eines Federelements 32 außer Eingriff. Das der Durchmesserausgleichklappe 14 zugewandte Teil 24 der Ratscheneinrichtung 24, 26 ist auf der Welle 42 drehbar und drehfest, insbesondere einstückig mit der Durchmesserausgleichklappe 14.

Durch eine kleinere Winkelteilung der Ratscheneinrichtung 24, 26 als der dargestellten lässt sich die Durchmesserausgleichsklappe 14 in Zwischenstellungen zwischen der in der Ausnehmung 20 einliegenden Stellung und einer vollständig in die Aufnahme 12 hinein verschwenkten Stellung halten (nicht dargestellt). Auch ist es möglich, mit einer Durchmesserausgleichsklappe 14, wie sie in Figuren 3a und b gezeigt ist, einen Teil eines beispielsweise ovalen Fachs als Aufnahme zum Einstellen eines Getränkebehälters abzutrennen. Der übrige Teil des Fachs steht auch bei eingestelltem Getränkebehälter zum Einlegen von Gegenständen zur Verfügung (nicht dargestellt).

## Patentansprüche

1. Halter für einen Getränkebehälter, mit einer Aufnahme zum Einstellen eines Getränkebehälters, mit einem Durchmesserausgleichselement, welches mit einer Führung in die Aufnahme hinein und aus der Aufnahme heraus beweglich geführt ist, und mit einem Federelement, das das Durchmesserausgleichselement in die Aufnahme hinein beaufschlagt, **dadurch gekennzeichnet, dass** der Halter (10) eine entriegelbare Rasteinrichtung (24, 26; 36, 40) aufweist, die das Durchmesserausgleichselement (14) gegen die Kraft des Federelements (22) in der aus der Aufnahme (12) heraus bewegten Stellung hält.

2. Halter nach Anspruch 1, **dadurch gekennzeichnet, dass** der Halter (10) eine Ratscheneinrichtung (24, 26) als Rasteinrichtung aufweist.

3. Halter nach Anspruch 2, **dadurch gekennzeichnet, dass** die Ratscheneinrichtung (24, 26) mindestens eine Zwischenraststellung, in der sie das Durchmesserausgleichselement (14) zwischen einer vollständig in die Aufnahme (12) hinein und einer aus der Aufnahme (12) heraus bewegten Stellung hält, aufweist.

4. Halter nach Anspruch 1, **dadurch gekennzeichnet, dass** die Führung des Durchmesserausgleichselements (14) eine Schwenklagerung (16, 18; 34; 42) aufweist.

5. Halter nach Anspruch 1, **dadurch gekennzeichnet, dass** der Halter (10) ein Fach (12) aufweist, in das das Durchmesserausgleichselement (14) so hinein bewegbar ist, dass es einen Teil des Fachs (12) als Aufnahme zum Einstellen des Getränkebehälters abtrennt.
